# EUROPÄISCHE PATENTANMELDUNG

(11) **EP 2 237 026 A1**
(43) Veröffentlichungstag der Anmeldung: **06.10.2010**
(21) Anmeldenummer: 10003246.5
(22) Anmeldetag: 26.03.2010
(51) Int. Cl.: G01N 21/88

(54) **Vorrichtung zum optischen Inspizieren einer Oberfläche an einem Gegenstand**

(30) Priorität: 03.04.2009 DE 102009017464
(71) Anmelder: Carl Zeiss OIM GmbH, 73117 Wangen (DE)
(72) Erfinder: Knupfer, Klaus-Georg, 73457 Essingen (DE); Huss, Volker, 73079 Süßen (DE); Kimmig, Wolfgang, 73430 Aalen (DE); Beck, Rolf, 73728 Esslingen (DE)
(74) Vertreter: Carl Zeiss AG - Patentabteilung

(57) **Zusammenfassung**

Eine Vorrichtung (10) zum optischen Inspizieren einer Oberfläche (58) an einem Gegenstand (56) besitzt ein Muster (28), das mit einer Vielzahl von helleren und dunkleren Bereichen (29, 30) ausgebildet ist. Die helleren und dunkleren Bereiche bilden einen ersten räumlichen Intensitätsverlauf (31) mit einer ersten räumlichen Periode. Ferner weist die Vorrichtung eine Aufnahme (54) zum Positionieren des Gegenstandes mit der Oberfläche (58) relativ zu dem Muster (28) auf. Das Positionieren erfolgt derart, dass der erste Intensitätsverlauf auf die Oberfläche fällt. Es ist weiter eine Steuereinheit (20) vorgesehen, die ein Verschieben des ersten Intensitätsverlaufs relativ zu der Oberfläche um eine definierte Schiebedistanz ermöglicht. Dabei nimmt die Oberfläche entlang der Schiebedistanz eine Vielzahl von unterschiedlichen Positionen relativ zu dem ersten Intensitätsverlauf ein. Eine Bildaufnahmeeinheit (50) ermöglicht ein Aufnehmen einer Vielzahl von Bildern, die die Oberfläche mit dem ersten Intensitätsverlauf an den unterschiedlichen Positionen zeigen. Weiter ist eine Auswerteeinheit (46) vorgesehen, die Eigenschaften der Oberfläche in Abhängigkeit von den Bildern bestimmt. Gemäß einem Aspekt der Erfindung ist eine Messeinheit (48) vorgesehen, die die Momentanposition des ersten Intensitätsverlaufs relativ zu dem Gegenstand (56) erfasst.

## Beschreibung

Die vorliegende Erfindung betrifft eine Vorrichtung zum optischen Inspizieren einer Oberfläche an einem Gegenstand mit:
- einem Muster mit einer Vielzahl von helleren und dunkleren Bereichen, die einen ersten räumlichen Intensitätsverlauf mit einer ersten räumlichen Periode bilden,
- einer Aufnahme zum Positionieren des Gegenstandes mit der Oberfläche relativ zu dem Muster derart, dass der erste Intensitätsverlauf auf die Oberfläche fällt,
- einer Steuereinheit zum Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt,
- zumindest einer Bildaufnahmeeinheit zum Aufnehmen einer Vielzahl von Bildern, die die Oberfläche mit dem ersten Intensitätsverlauf an den unterschiedlichen Positionen zeigen und
- einer Auswerteeinheit zum Bestimmen von Eigenschaften der Oberfläche in Abhängigkeit von den Bildern.

Die Erfindung betrifft ferner ein Verfahren zum optischen Inspizieren einer Oberfläche an einem Gegenstand, mit den Schritten: Bereitstellen eines Musters mit einer Vielzahl von helleren und dunkleren Bereichen, die einen ersten räumlichen Intensitätsverlauf mit einer ersten räumlichen Periode bilden, Positionieren des Gegenstandes mit der Oberfläche relativ zu dem Muster derart, dass der erste Intensitätsverlauf auf die Oberfläche fällt, Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt, Aufnehmen einer Vielzahl von Bildern, die die Oberfläche mit dem ersten Intensitätsverlauf an unterschiedlichen Positionen zeigen und Bestimmen von Eigenschaften der Oberfläche in Abhängigkeit von den Bildern.

Eine solche Vorrichtung und ein solches Verfahren sind beispielsweise aus WO 2009/007130 A1 bekannt.

Bei der industriellen Fertigung von Produkten spielt die Produktqualität eine immer wichtigere Rolle. Hohe Qualität kann einerseits durch entsprechend ausgelegte, stabile Fertigungsprozesse erreicht werden. Andererseits müssen die Qualitätsparameter eines Produktes möglichst genau, zuverlässig und vollständig kontrolliert werden, um Qualitätsmängel frühzeitig zu erkennen. In vielen Fällen spielt die Qualität einer Oberfläche eine wichtige Rolle für die Produkteigenschaften. Dabei kann es sich um dekorative Oberflächen handeln, wie etwa Lackoberflächen bei Kraftfahrzeugen, oder um technische Oberflächen, wie z.B. die Oberfläche von fein bearbeiteten metallischen Kolben oder Lagern.

Es gibt eine Vielzahl von Vorschlägen und Konzepten, um solche Oberflächen automatisiert zu prüfen. Die Deflektometrie ist für zumindest teilweise reflektierende Oberflächen ein sehr erfolgversprechendes Konzept, bei welchem ein Muster mit helleren und dunkleren Bereichen über die zu inspizierende Oberfläche betrachtet wird. Das Muster wird relativ zu der Oberfläche verschoben. Aufgrund der Veränderungen, welche die betrachteten Bereiche durch die Reflexion erfahren, ist es möglich, die reflektierende Oberfläche optisch zu inspizieren. Beispielsweise kann die lokale Neigung eines Oberflächenpunktes aus zumindest drei Bildern mit verschiedenen Relativpositionen des Musters bestimmt werden. Anhand der lokalen Neigungen können anschließend Kratzer, Poren, Beulen, Lunker und andere dimensionelle Defekte erkannt werden. Auch können Glanzgrad und Streueigenschaften der Oberfläche mittels der Deflektometrie bestimmt werden.

Die eingangs genannte WO 2009/007130 A1 beschreibt eine Vorrichtung und ein Verfahren der eingangs genannten Art, wobei die Oberfläche mit Hilfe der Deflektometrie inspiziert wird. Sämtliche Details zu der deflektometrischen Auswertung, die in WO 2009/007130 A1 offenbart sind, sollen hier durch Bezugnahme aufgenommen sein. Die bekannte Vorrichtung weist einen Tunnel auf, dessen Innenwand mit einem Muster versehen ist. Ein Gegenstand mit der zu inspizierenden Oberfläche, in diesem Fall ein Kraftfahrzeug, wird durch den Tunnel hindurchbewegt. Währenddessen wird die zu inspizierende Oberfläche mit mehreren Kameras aufgenommen. Aufgrund der Relativbewegung der Oberfläche zu dem Muster "wandert" das Muster aus Sicht der Kameras über die Oberfläche. Für die praktische Realisierung des Verfahrens ist es von Vorteil, wenn jeder zu inspizierende Oberflächenpunkt an zumindest vier verschiedenen Positionen relativ zu dem Muster aufgenommen wird, wobei die zumindest vier verschiedenen Positionen genau eine Periode des Intensitätsverlaufs abdecken. Dies kann bei dem Verfahren nach WO 2009/007130 A1 dadurch erreicht werden, dass die Bewegungsgeschwindigkeit des Kraftfahrzeugs im Tunnel genau an die geometrischen Verhältnisse des Musters in dem Tunnel angepasst ist.

Vor diesem Hintergrund ist es eine Aufgabe der vorliegenden Erfindung, eine alternative Vorrichtung und ein alternatives Verfahren anzugeben, um eine Oberfläche weitgehend automatisiert, schnell, zuverlässig und mit hoher Genauigkeit zu inspizieren. Dabei sollen die Vorrichtung und das Verfahren universell einsetzbar sein und sich kostengünstig realisieren lassen.

Diese Aufgabe wird nach einem Aspekt der Erfindung durch eine Vorrichtung der eingangs genannten Art mit einer Messeinheit gelöst, die dazu ausgebildet ist, eine Momentanposition des ersten Intensitätsverlaufs relativ zu dem Gegenstand zu bestimmen.

Nach einem weiteren Aspekt der Erfindung wird diese Aufgabe durch ein Verfahren der eingangs genannten Art gelöst, wobei eine Momentanposition des ersten Intensitätsverlaufs relativ zum Gegenstand bestimmt wird.

Die neue Vorrichtung und das neue Verfahren bestimmen die Momentanposition des Intensitätsverlaufs relativ zu der Oberfläche mit Hilfe einer geeignet ausgebildeten Messeinheit. Mit anderen Worten wird die Momentanposition des Intensitätsverlaufs relativ zu der Oberfläche anhand von individuellen, situationsbezogenen Messwerten bestimmt, und zwar für eine Vielzahl von verschiedenen Momentanpositionen, die sich aufgrund der relativen Verschiebung von Oberfläche und Intensitätsverlauf ergeben. Bevorzugt wird die Oberfläche auch bei der neuen Vorrichtung und dem neuen Verfahren deflektometrisch inspiziert, so dass die Momentanposition - anders als etwa bei einer trigonometrischen Auswertung - für die Inspektion der Oberfläche nicht benötigt wird. Die aktuelle, situationsbezogene Momentanposition wird jedoch vorteilhaft als zusätzliche Information bereitgestellt, um insbesondere die Bildaufnahme zu vereinfachen. Für eine deflektometrische Auswertung wird zwar die Momentanposition nicht als Parameter benötigt. Jedoch sollten die Bilder in möglichst gleichmäßigen Abständen aufgenommen, deren Summe der Periode des Intensitätsverlaufs entspricht. Dies kann mit Hilfe einer Messeinheit einfacher und kostengünstiger sichergestellt werden als nach dem Stand der Technik. Zudem können die neue Vorrichtung und das neue Verfahren einfacher an wechselnde Einsatz- und Betriebsbedingungen angepasst werden. Damit lassen sich die neue Vorrichtung und das neue Verfahren flexibler einsetzen als die bekannte Vorrichtung und das bekannte Verfahren.

Die Momentanposition kann insbesondere sehr vorteilhaft dazu verwendet werden, um Gleichlaufschwankungen beim Verschieben des Musters relativ zu der Oberfläche auszugleichen. Damit ermöglichen die neue Vorrichtung und das neue Verfahren trotz der zusätzlichen Messeinheit eine kostengünstige Realisierung, weil die relative Verschiebung mit einfacheren Antrieben erreicht werden kann. In besonders bevorzugten Ausführungsbeispielen ist das Muster ein vordefiniertes, unveränderliches (passives) Muster, das beispielsweise auf eine Folie oder einen anderen Musterträger aufgedruckt ist, wobei der Träger relativ zu der Oberfläche mechanisch bewegt wird. Weiter sind passive Muster denkbar, die auf den Träger gemalt oder in den Träger geätzt sind.

Das Verschieben des Musters relativ zur Oberfläche kann durch Bewegen des Gegenstands erfolgen, wie dies in der WO 2009/007130 A1 beschrieben ist. Besonders vorteilhaft erfolgt das Verschieben des Musters hier jedoch durch Bewegen des Musterträgers. Dabei kann die zu inspizierende Oberfläche ortsfest sein, was bevorzugt ist, oder zusätzlich zum Bewegen des Gegenstands ebenfalls bewegt werden. Entscheidend für eine deflektometrische Inspektion ist die Relativbewegung zwischen Muster und Oberfläche. Das Bewegen kann in allen Fällen ein lineares oder ein rotierendes Bewegen sein. Das lineare Bewegen lässt sich sehr wirtschaftlich und insbesondere für große Objekte durch die Verwendung eines Transportbandes realisieren, das den Gegenstand an einem ortsfesten Muster in einem Tunnel vorbei bewegt. Durch das Erfassen der Momentanposition können Gleichlaufschwankungen des Transportbandes bei der Aufnahme (Zeitpunkt der Bildaufnahme) und der Auswertung der Bilder berücksichtigt werden. Das rotierende Bewegen lässt sich sehr vorteilhaft durch einen um den Gegenstand rotierenden Musterträger realisieren, etwa ein zylinderförmiger Tunnel, der um seine Längsachse rotiert. Vorteilhaft kann ein Kreisrohr, dessen Innenmantel mit dem Muster versehen ist, als Musterträger dienen. Durch das Erfassen der Momentanposition können auch hier Gleichlaufschwankungen des rotierenden Trägers bei der Triggerung der Bildaufnahme und der Auswertung der Bilder berücksichtigt werden.

Zum Erfassen der Momentanposition ist der Einsatz von mindestens einem Sensor vorteilhaft, der ortsfest zu dem Gegenstand mit der Oberfläche angeordnet ist. Denkbar ist aber auch, den Sensor ortsfest zu dem Muster anzuordnen, sodass der Sensor die Momentanposition der Oberfläche relativ zu dem Muster mit dem Intensitätsverlauf erfasst. Besonders zuverlässig und flexibel ist die Kombination beider Möglichkeiten, wobei ein Sensor ortsfest zu der Oberfläche und ein weiterer Sensor ortsfest zu dem Muster angeordnet sind. Dabei kann auch vorgesehen sein, dass die Sensoren direkt miteinander kommunizieren und so eine noch sicherere und/oder genauere Bestimmung der Momentanposition ermöglichen.

Ein weitere Vorteil einer messtechnischen Bestimmung der Momentanposition ergibt sich in Kombination mit einer weiteren Neuerung, die in einer parallelen Patentanmeldung der Anmelderin mit gleichem Anmeldetag im Detail beschrieben ist. Danach wird der Lichtfluss bzw. die Lichtstärke, die von der Bildaufnahmeeinheit erfasst wird, in Abhängigkeit von der aktuell bestimmten Momentanposition gesteuert und verändert. Beispielsweise wird die Helligkeit der Umgebungsbeleuchtung in Abhängigkeit von der aktuell bestimmten Momentanposition verändert. Durch Verändern der Lichtstärke während der Belichtungszeit kann der Intensitätsverlauf einer Filterung unterworfen werden, die vorteilhaft dazu beiträgt, die Qualität des Intensitätsverlaufs zu verbessern. Insbesondere kann auf diese Weise ein sinusförmiger Intensitätsverlauf mit Hilfe einer Tiefpassfilterung aus einem nicht exakt sinusförmigen Intensitätsverlauf erzeugt werden, was für eine exakte deflektometrische Inspektion von Vorteil ist. Mit Hilfe der aktuell bestimmten Momentanposition kann dies sehr synchron zu der Relativbewegung des Musters erfolgen.

Anhand der Momentanposition können schließlich auch unerwünschte Bereiche des Musters einfach und schnell identifiziert werden. Ein unerwünschter Bereich kann beispielsweise eine Stoßkante sein, an der mehrere Teile des Musters aneinanderstoßen. Gerade in derartigen Bereichen kann entweder die Stoßkante selbst oder ein Übergang des Musters an der Stoßkante zu Fehlern beim Bestimmen von Eigenschaften der Oberfläche führen. Ein schnelles und kostengünstiges Erkennen unerwünschter Bereiche ermöglicht die einfache Anwendung von Korrekturmaßnahmen. Dadurch lässt sich auf kostengünstige und automatisierte Weise eine noch höhere Inspektionsgenauigkeit erreichen.

Die obengenannte Aufgabe ist daher vollständig gelöst.

In einer bevorzugten Ausgestaltung der Erfindung weist die Messeinheit mindestens einen optischen Sensor auf.

In dieser Ausgestaltung wird die Momentanposition optisch erfasst. Dies hat den Vorteil, dass die Momentanposition berührungslos und verschleißfrei festgestellt werden kann. Dies führt wiederum zu einer hohen Robustheit der Vorrichtung gegen unerwünschte Effekte einer Alterung sowie gegen Messunsicherheiten aufgrund Temperaturschwankungen. Bei dem optischen Sensor kann es sich vorteilhaft um eine Reflektionslichtschranke handeln. Weiter ist es denkbar, eine zusätzliche Bildaufnahmeeinheit oder die bereits vorhandene Bildaufnahmeeinheit als optischen Sensor zu verwenden.

In einer weiteren Ausgestaltung weist die Messeinheit mindestens einen Markierungsbereich auf, der ortsfest mit dem Muster verbunden ist.

In dieser Ausgestaltung ist ein besonderer Markierungsbereich vorgesehen, anhand dessen die Momentanposition des ersten Intensitätsverlaufs erfasst wird. Aufgrund der festen Beziehung des Markierungsbereiches zu dem Muster kann die Momentanposition des Intensitätsverlaufs sehr einfach und schnell anhand der Position des Markierungsbereiches bestimmt werden. Ein gesonderter Markierungsbereich bietet den Vorteil, dass stets innerhalb eines definierten örtlichen Bereiches gemessen werden kann, so dass innerhalb des Bereiches optimale Voraussetzungen für das Messen geschaffen werden können. Dies kann unabhängig von den Voraussetzungen für das Inspizieren der Oberfläche geschehen, so dass das Erfassen der Momentanposition vorteilhafterweise unabhängig von dem Inspizieren der Oberfläche erfolgt. Besonders vorteilhaft ist es, wenn sich der Markierungsbereich in die Richtung erstreckt, in die die Relativbewegung zwischen der Oberfläche und dem ersten Intensitätsverlauf erfolgt. Auch ist es denkbar, den Markierungsbereich in oder über dem ersten Intensitätsverlauf anzuordnen. Bei Anordnung des Markierungsbereichs in, über oder an dem Muster ist der Markierungsbereich vorzugsweise so klein wie möglich auszulegen, so dass das optische Inspizieren der Oberfläche nicht oder nur gering beeinflusst wird.

In einer weiteren Ausgestaltung weist das Muster einen Randbereich auf, der den Markierungsbereich bildet.

In dieser Ausgestaltung beinhaltet das Muster selbst den Markierungsbereich. Die Momentanposition wird vorteilhaft an dem Randbereich erfasst. Dies hat den Vorteil, dass der Sensor an dem Randbereich des Musters angeordnet sein kann, so dass das Inspizieren der Oberfläche durch die Messeinheit nicht oder nur unwesentlich beeinflusst wird. Entlang des Randbereiches, in Richtung der Relativbewegung, bildet das Muster hier eine charakteristische Struktur. Diese erlaubt es, eine Bewegung des Musters in Richtung der Erstreckung des Randbereiches zu messen und somit die Momentanposition des ersten Intensitätsverlaufs zu erfassen. Bei ausreichender Tiefe des Randbereiches, quer zur Relativbewegung, kann auch eine Bewegung quer zur Erstreckung des Randbereiches gemessen werden.

In einer weiteren Ausgestaltung grenzt der Markierungsbereich an einem Rand des Musters an.

In dieser Ausgestaltung liegt der Markierungsbereich außerhalb des Musters. Vorteilhaft ist in diesem Fall, dass der Markierungsbereich unabhängig von der Realisierung des Musters gestaltet werden kann. Gleichzeitig ergeben sich die Vorteile der vorgenannten Ausgestaltung, da der an den Rand des Musters angrenzende Markierungsbereich einen zusätzlichen, an dem Muster angebrachten Randbereich bildet. Denkbar ist auch ein Überlappen des Markierungsbereiches mit dem Muster, so dass der Markierungsbereich das Muster begrenzt.

In einer weiteren Ausgestaltung ist ein Hilfsmuster in dem Markierungsbereich angeordnet.

In dieser Ausgestaltung ist ein zusätzliches Muster, ein Hilfsmuster, im Markierungsbereich angeordnet, wodurch die Momentanposition des ersten Intensitätsverlaufs vereinfacht erfasst werden kann. Vorteil hierbei ist, dass das Hilfsmuster je nach Anforderung gröber oder feiner ausgestaltet sein kann als das Muster mit dem ersten Intensitätsverlauf. Vorteilhaft sind Hilfsmuster, die eine Codierung der aktuellen Momentanposition in Form von absoluten Werten beinhalten. Dadurch lässt sich nicht nur eine Veränderung der Momentanposition, sondern der Absolutwert der Momentanposition direkt erfassen. Alternativ sind einfache Inkrementalmuster als Hilfsmuster denkbar, die das Erfassen der Veränderung der Momentanposition ermöglichen. Derartige Hilfsmuster zeichnen sich durch eine einfache, periodische Struktur aus, welche einfach, genau und wirtschaftlich umgesetzt werden kann.

In einer Ausgestaltung ist das Hilfsmuster ein Rechtecksmuster.

In dieser Ausgestaltung wird das Rechtecksmuster zum Erfassen der Momentanposition des ersten Intensitätsverlaufs verwendet. Vorteil hierbei ist, dass das Rechtecksmuster technisch sehr einfach realisiert werden kann, indem hellere und dunklere Bereiche sprung- oder stufenartig aufeinander folgen. Vorzugsweise sind die helleren und dunkleren Bereiche in Erstreckungsrichtung des Markierungsbereichs gleich lang ausgebildet, so dass jede Erfassung einer Änderung in der Intensität des Rechteckmusters mit einer bestimmten, festen Distanz gleichzusetzen ist, mit der der erste Intensitätsverlauf verschoben wurde. Eine hohe Auflösung zur Erfassung der Momentanposition kann durch die Verwendung eines Rechtecksmusters mit einer hohen Frequenz erfolgen. Denkbar ist auch eine Verwendung einer Vielzahl an Sensoren, welche entlang des Hilfsmusters versetzt zueinander angeordnet sind. Dies erfolgt vorzugsweise so, dass Zwischengrößen beim Verschieben als Momentanpositionen erfasst werden können.

In einer weiteren Ausgestaltung weist ein Trägerelement das Muster und den Markierungsbereich auf.

In dieser Ausgestaltung trägt das Trägerelement sowohl das Muster als auch den Markierungsbereich. Vorteil hierbei ist, dass das Muster und der Markierungsbereich auf dem Trägerelement ortsfest miteinander verbunden sind und auf einfache Weise in der Vorrichtung angeordnet werden können, ohne dass sich der Markierungsbereich gegenüber dem Muster verschiebt. Auf diese Weise wird eine besonders exakte Anordnung des Markierungsbereichs gegenüber dem Muster erreicht. Als Trägerelement ist beispielsweise Folie oder Papier denkbar. Die Ausgestaltung des Trägerelements ist jedoch abhängig von der Ausgestaltung der Vorrichtung, so dass als Trägerelement auch eine Tunnelwandung oder beispielsweise eine Kunststoffplatte in Betracht kommen. Das Muster sowie der Markierungsbereich können in unterschiedlicher Form auf dem Trägerelement angeordnet werden. Beispielsweise können sie auf das Trägerelement aufgemalt, aufgedruckt oder aufgeklebt werden. Denkbar ist auch eine Projektion des Musters und des Markierungsbereichs auf das Trägerelement. Ferner sind als Trägerelemente durchsichtige oder reflektierende Oberflächen denkbar, welche durch bereichsweise Veränderung ihrer optischen Eigenschaften das Muster und den Markierungsbereich bilden. Eine derartige Veränderung kann beispielsweise durch ein Ätzen oder ein bereichsweises Anschleifen des Trägerelements erfolgen. Besonders vorteilhaft ist die Verwendung eines austauschbaren Trägerelements, welches an der Vorrichtung bei Bedarf ausgetauscht werden kann. So besteht die Möglichkeit, schnell, einfach und wirtschaftlich das Muster auszutauschen und gleichzeitig die Ortsfestigkeit des Markierungsbereiches gegenüber dem Muster beizubehalten. Auf diese Weise wird die Genauigkeit der Messeinheit mit Kostenvorteil erhöht.

In einer weiteren Ausgestaltung sind das Muster und der Markierungsbereich an einem Rohrelement angeordnet, wobei sich der Markierungsbereich in Umfangsrichtung des Rohrelements erstreckt.

In dieser Ausgestaltung bildet das Rohrelement entweder eine Haltevorrichtung für das Muster und den Markierungsbereich, insbesondere dann, wenn diese auf einem Trägerelement angeordnet sind, oder das Rohrelement bildet das Trägerelement selbst. Ein Verschieben des Musters gegenüber der Oberfläche kann durch Verdrehen des Rohrelements um seine Längsachse erfolgen. Dies setzt eine geeignete Wahl des Musters voraus. Der Markierungsbereich erstreckt sich in Umfangsrichtung des Rohrelements. Auf diese Weise kann ein Bewegen des Rohrelements um seine Längsachse herum sehr einfach erfasst werden kann. Die Verwendung des Rohrelements besitzt den Vorteil, dass das Verschieben des ersten Intensitätsverlaufs zur Oberfläche sehr einfach durch Rotation des Rohrelements herbeigeführt werden kann. Dies führt wiederum zu konstruktiven Vorteilen, die insgesamt zu einer sehr einfachen und kompakten Vorrichtung führen. Gleichzeitig wird erreicht, dass das Muster "endlos" entlang der Oberfläche verschoben werden kann. Gleichzeitig wird erreicht, dass die Momentanposition des ersten Intensitätsverlaufs ständig erfasst wird. Besonders vorteilhaft ist es, bei der Verwendung des Rohrelements in Verbindung mit optischen Sensoren mehrere optische Sensoren winkelversetzt zueinander entlang des Markierungsbereichs anzuordnen, so dass die Auflösung beim Erfassen der Momentanposition erhöht wird. Sowohl das Muster als auch der Markierungsbereich können sich jeweils auf dem Außenmantel des Rohrelements oder auf dem Innenmantel des Rohrelements befinden. Weiter ist es denkbar, ein Rohrelement zu verwenden, welches lichtdurchlässig ist, so dass der Innenbereich des Rohrelements von außen beleuchtet werden kann oder die Außenumgebung des Rohrelements aus dem Inneren des Rohrelements beleuchtet werden kann.

In einer weiteren Ausgestaltung verschiebt die Steuereinheit den ersten Intensitätsverlauf in Abhängigkeit von der Messeinheit.

In dieser Ausgestaltung wird die Momentanposition des ersten Intensitätsverlaufs dazu verwendet, die Verschiebung des ersten Intensitätsverlaufs zu überwachen oder zu regeln. Fehler beim Verschieben des ersten Intensitätsverlaufs werden dadurch minimiert oder gänzlich verhindert. Gleichzeitig kann eine kontinuierliche, gleichbleibende Bewegung gewährleistet werden. In einer bevorzugten Ausführungsform bilden die Messeinheit und die Steuereinheit einen Bewegungsregler für das Verschieben des ersten Intensitätsverlaufs.

In einer weiteren Ausgestaltung nimmt die Bildaufnahmeeinheit die Bilder in Abhängigkeit von der Messeinheit auf.

In dieser Ausgestaltung wird die Bildaufnahmeeinheit in Abhängigkeit von der messtechnisch bestimmten Momentanposition des ersten Intensitätsverlaufs gesteuert. Dabei ist insbesondere der Zeitpunkt des Auslösens, also der Zeitpunkt, an dem eine Bildaufnahme beginnt, von Bedeutung. Auch der Zeitpunkt des Schließens, also der Zeitpunkt an dem die Bildaufnahme beendet wird, kann vorteilhaft in Abhängigkeit von der Momentanposition gesteuert werden. Alternativ kann lediglich der Auslösezeitpunkt in Abhängigkeit von der Momentanposition getriggert werden, während die Belichtungszeit fest eingestellt ist. Die positionsabhängige Steuerung mindestens einer dieser beiden Parameter ermöglicht es, die Bildaufnahme sehr genau auf den Intensitätsverlauf anzupassen. Bestimmte Bereiche des Musters können gezielt ausgespart werden. Weiter wird als Vorteil erreicht, dass die Bildaufnahmeeinheit genau dann auslöst, wenn die gewünschte Momentanposition des Musters vorliegt, also synchron erfolgt. Dadurch kann verhindert werden, dass eine fehlerhafte Momentanposition bei Aufnehmen eines Bildes entsteht und wellenförmige Artefakte in dem jeweiligen Bild erzeugt, wie dies im asynchronen Fall erfolgen würde. Die Steuerung der Belichtungszeit, d.h. das Öffnen und Schließen des Verschlusse der Bildaufnahmeeinheit, ermöglicht es, den ersten Intensitätsverlauf über eine Zeitspanne hinweg in seiner Bewegung zu erfassen. Somit ergibt sich auf dem Bild bereichsweise ein Mittelwert für die Intensität des Intensitätsverlaufs über die Zeit. Mit anderen Worten wird der Intensitätsverlauf über eine längere Belichtungszeit "verschmiert". Dieser Effekt ermöglicht es, ein kontinuierliches, weicheres Muster auf den Bildern zu erzeugen. Auf diese Weise kann auch aus einem tatsächlich gerastert dargestellten Muster, das beispielsweise mittels eines Dithering-Druckverfahrens hergestellt wurde, ein entsprechendes, weiches und kontinuierliches Muster auf den Bildern erzeugt werden. Insbesondere wird dadurch erreicht, dass drucktechnische Störungen vollständig oder zumindest weitgehend eliminiert werden.

In einer weiteren Ausgestaltung bestimmt die Auswerteeinheit die Eigenschaften der Oberfläche in Abhängigkeit von der Messeinheit.

In dieser Ausgestaltung wird die Momentanposition des ersten Intensitätsverlaufs zur Auswertung der Bilder verwendet. Vorteil hierbei ist, dass erkannt werden kann, ob der erste Intensitätsverlauf auf unerwünschte Weise oder gar nicht verschoben wurde. Auch können bestimmte Bereiche des Musters identifiziert werden, so dass die Möglichkeit besteht, Bilder, die in Zusammenhang mit diesen Bereichen der Muster entstanden sind, bevorzugt, angepasst oder gar nicht auszuwerten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Ausführungsbeispiels der neuen Vor- richtung zum optischen Inspizieren einer Oberfläche an einem Gegenstand mit einer Messeinheit in einer Seitenansicht,
- Fig. 2: die Vorrichtung aus Fig. 1 in einer Draufsicht,
- Fig. 3: die Vorrichtung aus Fig. 1 während eines optischen Inspizierens der Ober- fläche,
- Fig. 4: eine vereinfachte Darstellung eines weiteren Ausführungsbeispiels der neuen Vorrichtung,
- Fig. 5: einen Abschnitt eines Ausführungsbeispiels eines Trägerelements mit einem Muster, und
- Fig. 6: einen Abschnitt eines weiteren Ausführungsbeispiels eines Trägerelements mit dem Muster.

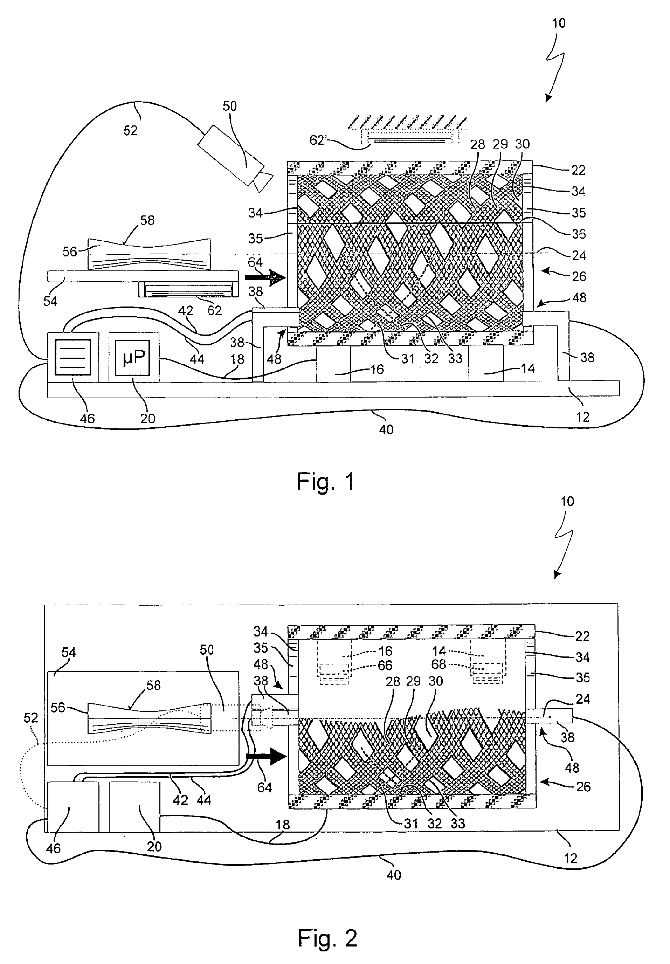

In den Fig. 1, 2, 3 und 4 sind die Ausführungsbeispiele der neuen Vorrichtung in der Gesamtheit mit der Bezugsziffer 10 bezeichnet.

Fig. 1 zeigt die Vorrichtung 10 in einer Seitenansicht. Die Vorrichtung weist hier eine Grundplatte 12 auf, auf der Halteteile 14 und 16 angeordnet sind. Das Halteteil 16 besitzt einen Antrieb und ist über eine Leitung 18 mit einer Steuereinheit 20 verbunden. Die Fig. 1 ist eine teilweise geschnittene Seitenansicht, so dass lediglich die vorderen Seitenansichten der Halteteile 14 und 16 dargestellt ist. Die Halteteile 14 und 16 stützen ein Rohrelement 22, das eine Längsachse 24 besitzt. Die Längsachse 24 ist parallel zur Grundplatte 12 ausgerichtet. Somit stützen die Halteteile 14 und 16 das Rohrelement 22 an seinem Außenmantel ab. Dies geschieht hier so, dass sich das Rohrelement 22 um seine Längsachse 24 drehen kann. Auf dem Innenmantel des Rohrelements 22 ist in diesem Fall eine Folie 26 angeordnet. Die Folie 26 dient als Trägerelement für ein Muster 28. Das Muster 28 weist dunklere Bereiche 29 und hellere Bereiche 30 auf. Die aufeinanderfolgenden Bereiche 29, 30 bilden hier zwei quer zueinander verlaufende, periodische Intensitätsverläufe 31, 32, jeweils mit einer definierten Periode. In einem Ausführungsbeispiel bilden die helleren und dunkleren Bereiche 29, 30 ein Muster mit rechteckigen Intensitätsverläufen 31, 32. Die Bereiche 29, 30 gehen hier jeweils an einer Stelle 33 der Periode sprunghaft ineinander über. In anderen Ausführungsbeispielen können die Intensitätsverläufe sinusförmig, sägezahnförmig oder mit anderen kontinuierlichen Übergängen ausgebildet sein. Das dargestellte Muster 28 ergibt sich aus zwei orthogonal zueinander gekreuzten Streifengruppen, die gruppenweise die gleiche Streifenbreite aufweisen. Orthogonal zu den Erstreckungen der Streifengruppen ergeben sich der erste und der zweite Intensitätsverlauf 31, 32 für das Muster 28. Die Streifengruppen können zueinander unterschiedliche Streifenbreiten besitzen. Das Muster 28 endet hier an Rändern 34, welche sich in Umfangsrichtung um die Längsachse 24 entlang des Innenmantels des Rohrelements 22 erstrecken. An den Rändern 34 grenzt jeweils ein Markierungsbereich 35 an das Muster 28 an. In anderen Ausführungsbeispielen kann ein einzelner Markierungsbereich 35 an einem Rand 34 vorgesehen sein.

Die Markierungsbereiche 35 sind aus Gründen der Übersichtlichkeit in den Fig. 1 bis 4 ohne detaillierte Markierungen dargestellt. Die Markierungsbereiche 35 sind in diesem Fall zusammen mit dem Muster 28 auf der Folie 26 aufgebracht. Dies hat zur Folge, dass das Muster 28 und die Markierungsbereiche in einer festen räumlichen Beziehung (ortsfest) zueinander stehen. Die Markierungsbereiche 35 wirken hier mit optischen Sensoren 38 zusammen. Dabei ist hier ein Markierungsbereich 35 mit zwei optischen Sensoren 38 und der andere Markierungsbereich 35 mit einem optischen Sensor 38 versehen. Die optischen Sensoren 38 sind über Leitungen 40, 42 und 44 mit einer Auswerteeinheit 46 verbunden. Die Auswerteeinheit 46 wertet die von den Sensoren 38 gelieferten Informationen aus und bestimmt somit eine Momentanposition der Intensitätsverläufe 31, 32. Die Sensoren 38 bilden hier zusammen mit den Markierungsbereichen 35 eine Messeinheit 48, mit deren Hilfe die Momentanposition der Intensitätsverläufe 31, 32 bestimmt werden kann. Zum optischen Inspizieren einer Oberfläche an einem Gegenstand ist eine Bildaufnahmeeinheit (Kamera) 50 so angeordnet, dass sie in den Innenraum des Rohrelements blickt. Die Kamera 50 ist über eine Leitung 52 mit der Auswerteeinheit 46 verbunden. Die Auswerteeinheit 46 wertet die Bilder von der Kamera 50 aus, um die Oberfläche zu inspizieren.

Die Vorrichtung 10 besitzt ferner eine Aufnahme 54, auf der hier ein Gegenstand 56 mit einer zu inspizierenden Oberfläche 58 angeordnet ist. Unterhalb der Aufnahme 54 ist eine Lichtquelle 62 angebracht, die beim optischen Inspizieren für eine ausreichende Lichtstärke sorgt. Zudem ist oberhalb des Rohrelements 22 eine alternative oder zusätzliche Lichtquelle 62' dargestellt. Diese führt in Verbindung mit einem lichtdurchlässigen Material des Rohrelements 22 zu einer ausreichenden Beleuchtung innerhalb des Zylinderelements 22. Die Aufnahme 54 kann in Richtung des Pfeils 64 bewegt werden, so dass der Gegenstand 56 in das Rohrelement 22 hineinbewegt wird.

Die Fig. 2 zeigt die Vorrichtung 10 der Fig. 1 in einer Draufsicht von oben. Das Rohrelement 22 ist wieder im Schnitt dargestellt. Zur besseren Darstellung der Halteteile 14 und 16 ist das Muster 28 nur bereichsweise gezeigt. Das Halteteil 16 weist eine Antriebswalze 66 auf, welche an dem Außenmantel des Rohrelements 22 anliegt und dieses durch Rotation antreibt. Das Halteelement 14 weist eine Lagerwalze 68 auf, an welcher sich das Rohrelement 22 mit seinem Außenmantel abstützt. Die Antriebswalze 66 und die Lagerwalze 68 sind drehbar in den Halteteilen 16 und 14 gelagert. Die Kamera 50 sowie die Leitung 52 sind für eine verbesserte Darstellung punktiert und durchsichtig dargestellt.

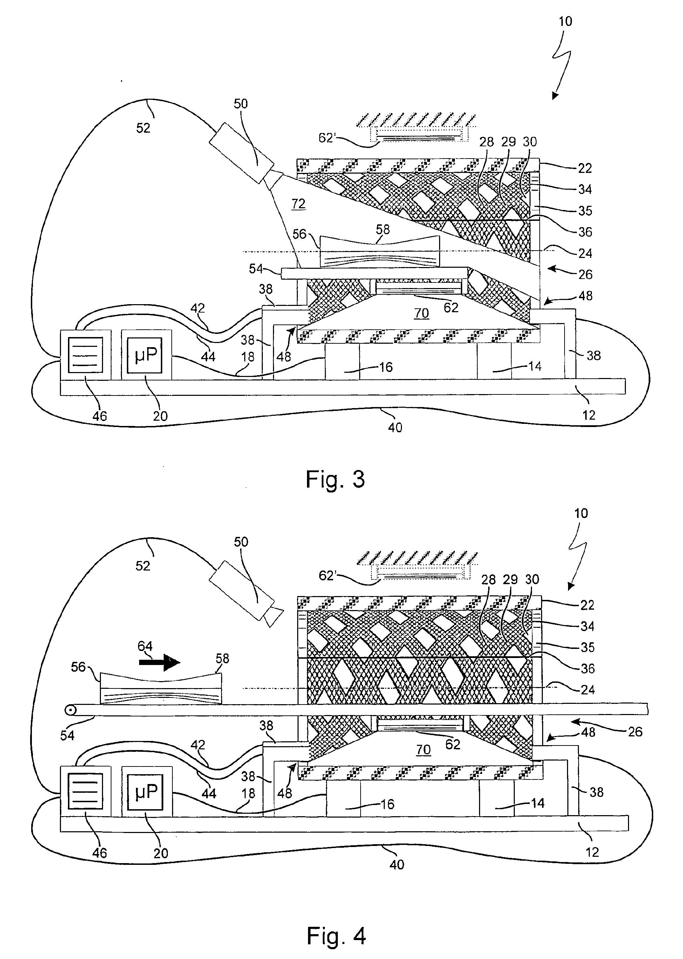

Die Fig. 3 zeigt die Vorrichtung 10 der Fig. 1 und 2 in einer Seitenansicht während eines optischen Inspizierens der Oberfläche 58 des Gegenstandes 56. Zu diesem Zweck wurde die Aufnahme 54 mit dem Gegenstand 56 in das Innere des Rohrelements 22 in Richtung des Pfeils 64 bewegt. Beim Inspizieren der Oberfläche 58 rotiert das Rohrelement 22 um seine Längsachse 24 und bewegt dadurch die Folie 26. Aufgrund der Ausgestaltung des Musters 28 wird durch das Rotieren der erste Intensitätsverlauf 31 und der zweite Intensitätsverlauf 32 des Musters 28 relativ zu der Oberfläche 58 verschoben.

Die Steuereinheit 20 steuert den Antrieb des Halteteils 16 derart, dass das Rohrelement 22 um die Längsachse 24 rotiert. Um eine Inspektion der Oberfläche 58 mit ausreichender Beleuchtung zu ermöglichen, ist die Lichtquelle 62 eingeschaltet, so dass sie einen Lichtkegel 70 erzeugt. Alternativ oder zusätzlich kann die Lichtquelle 62' für eine ausreichende Beleuchtung eingesetzt werden. Dies ist dann vorteilhaft, wenn das Rohrelement 22 aus einem lichtdurchlässigen Material hergestellt ist.

Für das Inspizieren der Oberfläche 58 werden mit der Bildaufnahmeeinheit 50 mehrere Bilder nacheinander aufgenommen, wobei sich die Intensitätsverläufe 31, 32 an unterschiedlichen Positionen relativ zu der Oberfläche 58 befinden. Bevorzugt wird jeder zu inspizierende Oberflächenpunkt zumindest vier Mal aufgenommen, wobei der der Oberflächenpunkt in jedem der zumindest vier Bilder eine andere Relativposition zu den Intensitätsverläufen 31, 32 besitzt. Des weiteren ist es von Vorteil, wenn die zumindest vier Bilder genau eine Periode der Intensitätsverläufe abdecken. In diesem Fall können die Bilder sehr einfach nach der bekannten 4-Bucket-Methode, die beispielsweise in der eingangs genannten WO 2009/007130 A1 beschrieben ist, deflektometrisch ausgewertet werden.

Das Inspizieren der Oberfläche 58 erfolgt innerhalb eines Aufnahmebereichs 72, der die zu inspizierende Oberfläche 58 erfasst. Eine Oberfläche, die innerhalb des Aufnahmebereichs 72 nicht vollständig erfasst werden kann, kann durch Verschieben des Gegenstandes entlang der Längsachse 24 abschnittsweise inspiziert werden. Die mit der Kamera 50 aufgenommenen Bilder werden an die Auswerteeinrichtung 46 zur Auswertung übertragen.

Die Rotationsbewegung des Rohrelements 22 wird von der Messeinheit 48 erfasst und ebenfalls an die Auswerteeinheit 46 übertragen. Anhand der von der Messeinheit 48 gelieferten Messwerte kann festgestellt werden, ob und wie weit sich das Muster (und damit die Intensitätsverläufe 31, 32) relativ zu der Oberfläche 58 verschoben haben. Ferner kann festgestellt werden, ob Bereiche des Musters 28, wie beispielsweise die Stoßkante 36, von der Kamera 50 erfasst wurden. In einem Ausführungsbeispiel steuert die Auswerteeinheit 46 anhand der mit der Messeinheit bestimmten Momentanposition die Bewegung des Rohrelements 22 über die Steuereinheit 20. Des weiteren triggert die Auswerteeinheit 46 in bevorzugten Ausführungsbeispielen die Kamera 50 in Abhängigkeit von der Momentanposition des Rohrelements 22 (und damit in Abhängigkeit von der Momentanposition der Intensitätsverläufe 31, 32), so dass der Zeitpunkt der Bildaufnahme mit der Kamera 50 anhand der Momentanposition bestimmt wird.
Fig. 4 zeigt ein weiteres Ausführungsbeispiel der Vorrichtung 10. Das Ausführungsbeispiel in Fig. 4 unterscheidet sich von dem Ausführungsbeispiel in Fig. 1 durch die Verwendung eines Transportbandes als Aufnahme 54. Die Lichtquelle 62 ist in diesem Fall ortsfest zu der Grundplatte 12 an dem Transportband befestigt. Daraus ergibt sich, dass die Lichtquelle 62 stets die gleiche räumliche Position innerhalb des rotierenden Rohrelements 22 einnimmt und damit für eine gleichbleibende Beleuchtung sorgt. Die Verwendung des Transportbandes als Aufnahme 54 besitzt den Vorteil, dass viele Gegenstände 56 schnell nacheinander inspiziert werden können. Zudem ermöglicht dieses Ausführungsbeispiel eine sehr einfache Einbindung der Vorrichtung 10 in bestehende Produktionsabläufe.

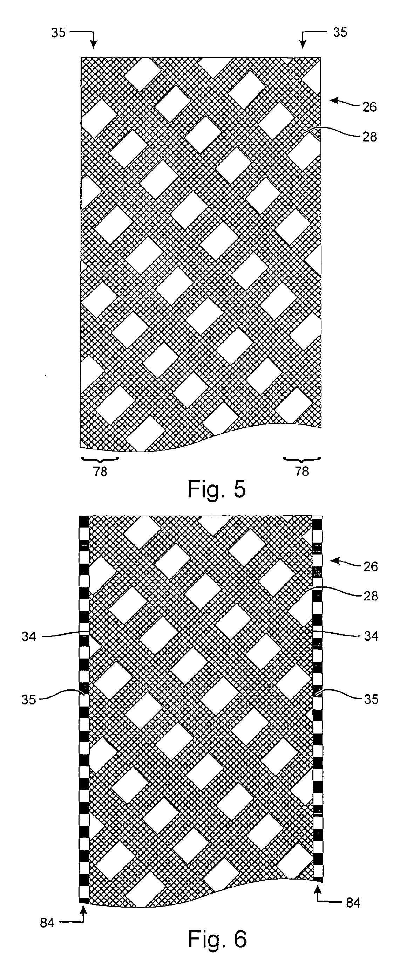

Fig. 5 zeigt einen Abschnitt der Folie 26 in einem Ausführungsbeispiel. Das Muster 28 erstreckt sich hier in die Markierungsbereiche 35 hinein, so dass ein Randbereich 78 des Musters 28 den oder die Markierungsbereiche 35 bildet. Dieses Ausführungsbeispiel bietet den Vorteil, dass sich das Muster 28 über die gesamte Innenfläche des Rohrelements erstrecken kann. Die Momentanposition der Intensitätsverläufe 31, 32 kann hier anhand der periodischen Hell-Dunkel-Wechsel im Randbereich 78 erfasst werden.
Fig. 6 zeigt ein weiteres Ausführungsbeispiel der Folie 26. In diesem Ausführungsbeispiel ist das Muster 28 mittig auf der Folie 26 angeordnet und besitzt zwei Ränder 34. An den Rändern 34 grenzt hier jeweils ein weiteres Rechtsecksmuster 84 an. Die Rechtecksmuster 84 bilden die Markierungsbereiche 35. Sie verlaufen in einer Ebene senkrecht zu der Längsachse 24 des Rohrelements und erstrecken sich hier im wesentlichen über den gesamten inneren Umfang des Rohrelements 22. Vorteil bei dieses Ausführungsbeispiels ist, dass die Markierungsbereiche 35 mit einem eigenen Muster, gewissermaßen einem Hilfsmuster, versehen sind, das sich von dem Muster 28 unterscheidet. In besonders bevorzugten Ausführungsbeispielen bildet das Hilfsmuster zusammen mit dem optischen Sensor 38 einen Inkrementalgeber, mit dessen Hilfe die Drehbewegung des Rohrelements 22 um die Längsachse 24 sehr einfach verfolgt werden kann. Prinzipiell kann das Hilfsmuster aber auch eine Absolutposition des Rohrelements relativ zu einer definierten Startposition repräsentieren. Die Hilfsmuster können wesentlich einfacher ausgebildet sein als das Muster 28. Vorteilhaft sind sie als Rechteckmuster mit einer Periode realisiert, die klein im Vergleich mit der Periode der Intensitätsverläufe ist. Je kleiner die Periode ist, desto feiner kann die Momentanposition bestimmt werden. Abweichend von den dargestellten Ausführungsbeispielen kann die Vorrichtung auch mit nur einem Markierungsbereich 35 realisiert sein. Des weiteren kann das Muster 28 prinzipiell nur einen Intensitätsverlauf 31 oder mehr als zwei Intensitätsverläufe 31, 32 aufweisen.

In weiteren Ausführungsbeispielen der Erfindung kann die zu inspizierende Oberfläche bewegt werden, wie dies aus der eingangs genannten WO 2009/007130 A1 bekannt ist, während der Intensitätsverlauf 31, 32 stationär ist. In diesem Fall ist es von Vorteil, die Sensoren 38 in einer festen Position (ortsfest) relativ zu der Oberfläche 58 anzuordnen und zusammen mit der Oberfläche relativ zu dem Muster 28 zu verschieben.

## Patentansprüche

1. Vorrichtung (10) zum optischen Inspizieren einer Oberfläche (58) an einem Gegenstand (56), mit:
- einem Muster (28) mit einer Vielzahl von helleren und dunkleren Bereichen (29, 30), die einen ersten räumlichen Intensitätsverlauf (31) mit einer ersten räumlichen Periode bilden,
- eine Aufnahme (54) zum Positionieren des Gegenstandes (56) mit der Oberfläche (58) relativ zu dem Muster (28) derart, dass der ersten Intensitätsverlauf (31) auf die Oberfläche (58) fällt,
- einer Steuereinheit (20) zum Verschieben des ersten Intensitätsverlaufs (31) relativ zu der Oberfläche (58) um eine definierte Schiebedistanz, wobei die Oberfläche (58) entlang der Schiebedistanz eine Vielzahl von unterschiedlichen Positionen relativ zu dem ersten Intensitätsverlauf (31) einnimmt,
- zumindest einer Bildaufnahmeeinheit (50) zum Aufnehmen einer Vielzahl von Bildern, die die Oberfläche (58) mit dem ersten Intensitätsverlauf (31) an den unterschiedlichen Positionen zeigen, und
- einer Auswerteeinheit (46) zum Bestimmen von Eigenschaften der Oberfläche (58) in Abhängigkeit von den Bildern,
**gekennzeichnet durch** eine Messeinheit (48), die dazu ausgebildet ist, eine Momentanposition des ersten Intensitätsverlaufs (31) relativ zu dem Gegenstand (56) zu erfassen.

2. Vorrichtung (10) nach Anspruch 1, **dadurch gekennzeichnet, dass** die Messeinheit (48) mindestens einen optischen Sensor (38) aufweist.

3. Vorrichtung (10) nach einem der Ansprüche 1 oder 2, **dadurch gekennzeichnet, dass** die Messeinheit (48) mindestens einen Markierungsbereich (35) aufweist, der ortsfest mit dem Muster (28) verbunden ist.

4. Vorrichtung (10) nach Anspruch 3, **dadurch gekennzeichnet, dass** das Muster (28) einen Randbereich (78) aufweist, der den Markierungsbereich (35) bildet.

5. Vorrichtung (10) nach Anspruch 3 oder 4, **dadurch gekennzeichnet, dass** der Markierungsbereich (35) an einem Rand (82) des Musters (28) angrenzt.

6. Vorrichtung (10) nach einem der Ansprüche 3 bis 5, **gekennzeichnet durch** ein Hilfsmuster (84), das im Markierungsbereich (35) angeordnet ist.

7. Vorrichtung (10) nach Anspruch 6, **dadurch gekennzeichnet, dass** das Hilfsmuster (84) ein Rechtecksmuster (84) ist.

8. Vorrichtung (10) nach einem der Ansprüche 3 bis 7, **gekennzeichnet durch** ein Trägerelement (26), das das Muster (28) und den Markierungsbereich (35) aufweist.

9. Vorrichtung (10) nach einem der Ansprüche 3 bis 8, **gekennzeichnet durch** ein Rohrelement (22), an dem das Muster (28) und der Markierungsbereich (35) angeordnet sind, wobei sich der Markierungsbereich (35) in Umfangsrichtung des Rohrelements (22) erstreckt.

10. Vorrichtung (10) nach einem der Ansprüche 1 bis 9, **dadurch gekennzeichnet, dass** die Steuereinheit (20) den ersten Intensitätsverlauf (31) in Abhängigkeit von der Messeinheit (48) verschiebt.

11. Vorrichtung (10) nach einem der Ansprüche 1 bis 10, **dadurch gekennzeichnet, dass** die Bildaufnahmeeinheit (50) die Bilder in Abhängigkeit von der Messeinheit (48) aufnimmt.

12. Vorrichtung (10) nach einem der Ansprüche 1 bis 11, **dadurch gekennzeichnet, dass** die Auswerteeinheit (46) die Eigenschaften der Oberfläche (58) in Abhängigkeit von der Messeinheit (48) bestimmt.

13. Verfahren zum optischen Inspizieren einer Oberfläche (58) an einem Gegenstand (56), mit den Schritten:
- Bereitstellen eines Musters (28) mit einer Vielzahl von helleren und dunkleren Bereichen (29, 30), die einen ersten räumlichen Intensitätsverlauf (31) mit einer ersten räumlichen Periode bilden,
- Positionieren des Gegenstandes (56) mit der Oberfläche (58) relativ zu dem Muster (28) derart, dass der erste Intensitätsverlauf (31) auf die Oberfläche (58) fällt,
- Verschieben des ersten Intensitätsverlaufs (31) relativ zu der Oberfläche (58) um eine definierte Schiebedistanz, wobei die Oberfläche (58) entlang der Schiebedistanz eine Vielzahl von unterschiedlichen Positionen relativ zu dem ersten Intensitätsverlauf (31) einnimmt,
- Aufnehmen einer Vielzahl von Bildern, die die Oberfläche (58) mit dem ersten Intensitätsverlauf (31) an den unterschiedlichen Positionen zeigen und
- Bestimmen von Eigenschaften der Oberfläche (58) in Abhängigkeit von den Bildern,
**dadurch gekennzeichnet, dass** eine Momentanposition des ersten Intensitätsverlaufs (31) relativ zu dem Gegenstand (56) erfasst wird.

14. Computerprogramm mit Programmcode, der auf einem Datenträger gespeichert ist und der dazu ausgebildet ist, das Verfahren nach Anspruch 13 mit allen Verfahrensschritten auszuführen, wenn der Programmcode auf einem Computer einer Vorrichtung nach einem oder mehreren der Ansprüche 1 bis 12 ausgeführt wird.
